# EUROPEAN PATENT APPLICATION

(11) **EP 4 745 946 A1**
(43) Date of publication of application: **20.05.2026**
(21) Application number: 25215323.4
(22) Date of filing: 12.11.2025
(51) Int. Cl.: G09F 13/04, B60R 13/00, G09F 13/06, G09F 21/04, G09F 13/22

(54) **BACKLIT EMBLEM ASSEMBLY AND ASSOCIATED MANUFACTURING METHOD**

(30) Priority: 14.11.2024 IT 202400025692
(71) Applicant: SPM S.p.A. Societa' Benefit, 21030 Brissago Valtravaglia (IT)
(72) Inventor: ZONCA, Alessandro, 21030 Brissago Valtravaglia, Varese (IT); GIORLA, Mauro, 21030 Brissago Valtravaglia, Varese (IT)
(74) Representative: Colombo, Stefano Paolo

(57) **Abstract**

A backlit emblem assembly is described, the assembly comprising: an element, opaque to light radiation, comprising a portion at least partially transparent to light radiation delineating an emblem; a light radiation generating device coupled to the opaque element, the light radiation generating device being able to be selectively activated to generate light radiation so as to illuminate the emblem. The at least partially transparent portion of the opaque element comprises perforations formed in the opaque element; the perforations are arranged so as to delineate the emblem and are able to allow the passage of the light radiation generated by the light radiation generating device. A light-guiding element is interposed between the light radiation generating device and the opaque element, the light-guiding element for conveying the light radiation generated by the light radiation generating device towards the at least partially transparent portion of the opaque element.

## Description

### Technical sector

The present invention relates to a backlit emblem assembly. Advantageously, the backlit emblem may be for a vehicle (for example for an aesthetic component of a vehicle, such as an emblem assembly for a motor vehicle steering wheel) and to an associated manufacturing method.

### Prior art

The use of emblems, symbolic figures visually representing an idea, a concept or a value, is widespread in widely varying sectors. For example, the emblems are to be found in company logos, coats of arms, flags and in many other contexts.

The use of emblems is particularly widespread in the motor industry and in the production of motor cars and motorcycles and, more generally, of motor vehicles ("automotive" sector).

For example, for a long time it has been common usage to apply in the centre of each motor vehicle steering wheel an emblem representing the trademark of the car manufacturer which produces the vehicle.

Depending on the aesthetic appearance of the car manufacturer trademark (number of colours, surface finish, two or three-dimensional effect), the emblems are usually made of plastic material or aluminium or assemblies made of plastic or aluminium.

A recent tendency in the design of motor vehicles is resulting in the growing use of illuminated aesthetic components, inside and outside the vehicles. These illuminated aesthetic components are components which, when the vehicle engine is switched off, have a conventional appearance, but when the engine is switched on, they light up, thus creating a different more attractive and more modern effect.

This tendency includes also the emblems for a motor vehicle steering wheel, and emblems in general.

Emblems with a backlighting function, or backlit emblems, are at present made of transparent plastic (polycarbonate - PC - or polymethyl methacrylate - PMMA) and are composed of several elements, these including a transparent plastic lens, a printed circuit board (PCB) which has, mounted thereon and interconnected electrically, the LEDs for generating the light and the electric or electronic components for controlling the LEDs, and a light-guiding element which has the function of capturing the light generated by the LEDs and transporting it towards the transparent plastic lens.

The transparent plastic lens is decorated so that the surface thereof on which the desired emblem is reproduced, intended to allow the light to pass through - and therefore be illuminated - is transparent to the light generated by the LEDs and transported by the light-guiding element, while the remainder of the plastic lens has a covering function, is opaque and prevents the passage of the light.

The superficial part of the plastic lens which must allow the light to pass through is for example decorated using transparent coloured paints.

An aesthetically very popular solution consists in decorating the emblem by means of a metallization treatment. This treatment involves the deposition of a very thin metal layer, with a thickness of very few microns; therefore, when the light is off, the emblem (typically the trademark of the car manufacturer) has a metallized appearance, while, when lit, the light is able to pass through and the desired effect is obtained.

US 10,967,781 discloses an illuminated vehicular emblem for a means of transportation which includes a housing unit, a lighting unit and a light dimming unit. The housing unit includes a bottom case, a top case disposed on the bottom case, and an emblem member disposed above the top case. A receiving space is defined between the top and bottom cases to receive the lighting unit. The lighting unit includes a light guide plate, light emitting components and a first light shielding film disposed on the light guide plate. The light emitting components are disposed at the light guide plate such that the light guide plate receives light emitted from the light emitting components. The light dimming unit changes the direction of propagation of the light and includes a first dot portion distributed on the light guide plate and along a projection of an outline of the emblem member.

US 2024/0003520 discloses an illuminated substrate comprising a first surface and a second surface. The illuminated substrate defines perforations. A light diffusing layer is coupled to the first surface and overlays the perforations. A light source is disposed adjacent the second surface and emits light into the perforations. The light travels through the perforations from the second surface to and out of the first surface. The light then travels through the light diffusing layer. The perforations are arranged in a shape of an icon, and a shape of the light diffusing layer mimics the shape of the icon and ensures the light is evenly diffused. A coating is applied to the first surface and the light diffusing layer to provide protection, a smooth texture, a consistent appearance, and/or surface features.

### Summary of the invention

The Applicant has noticed that the known solutions for producing backlit emblems are not entirely satisfactory.

The use of transparent plastic for manufacture of the lens limits the production of backlit emblems solely to certain emblems (logos, motor vehicle manufacturer trademarks) present on the market.

As mentioned above, many car manufacturers prefer the use of emblems made of aluminium, since these are able to ensure a metallic appearance which paints are unable to achieve. Moreover, since they are made from flat sheets of aluminium, emblems consisting of several colours may be easily made.

However, aluminium by nature is not transparent to light and therefore in this case it is not possible to produce an emblem which is backlit by the light generated by the LEDs.

The object of the present invention is to provide a backlit emblem assembly which does not have, or at least partially avoids, the aforementioned drawbacks.

In accordance with one aspect of the present invention, a backlit emblem assembly is provided.

The backlit emblem assembly comprises an element, opaque to light radiation, comprising a portion at least partially transparent to light radiation, said at least partially transparent portion delineating an emblem.

The backlit emblem assembly comprises a light radiation generating device coupled to said opaque element. The light radiation generating device can be selectively activated to generate light radiation so as to illuminate the emblem.

The at least partially transparent portion of said opaque element comprises perforations formed in said opaque element. Said perforations are arranged so as to delineate the emblem and are able to allow the passage of the light radiation generated by said light radiation generating device.

In embodiments of the present invention, the emblem assembly preferably comprises a light-guiding element interposed between said light radiation generating device and said opaque element. The light-guiding element is able and arranged so as to convey the light radiation generated by the light radiation generating device towards said at least partially transparent portion of the opaque element.

In embodiments of the present invention, said opaque element comprises a metal plate, preferably made of aluminium.

In this way, the emblem represented by the emblem assembly and delineated by the perforations in the opaque element, has a metallized appearance which is very favourably viewed from an aesthetic point of view.

The Applicant has identified that many prior art solutions for backlit emblems focus on creating a uniformly diffused light source on the viewer-facing side of the emblem. This is often achieved by placing a diffuser in front of the light-passing portions of an emblem, or by masking a continuously illuminated front surface.

The present invention achieves a distinct technical and aesthetic effect by operating on an opposite principle. A light-guiding element is placed behind an opaque element. Its primary function is to receive light from a discrete light sources and create a plane of substantially uniform illumination on the rear surface of the opaque element, before the light passes through the perforations.

The effect perceived by the user is therefore not a masked, continuously lit shape. Instead, the user sees a multitude of discrete, equally-bright points of light passing through the perforations. These luminous points collectively delineate the emblem on a surface, such as brushed aluminium, that remains visibly opaque. By ensuring the light field is uniform behind the plate, each perforation emits light with the same intensity, resulting in a crisp, uniformly illuminated emblem without the "hot spots" common in direct-lit systems.

In embodiments of the present invention, said perforations comprise a plurality of through-holes passing through the thickness of said opaque element, for example perforations in said metal plate.

Said holes may be arranged in a two-dimensional matrix arrangement and/or along a plurality of lines which delineate the emblem. The though-holes may have, for example a cross-section with a width substantially corresponding to a thickness of said opaque element, for example equal to the thickness of the metal plate in which they are formed.

In embodiments of the present invention, said perforations in the opaque element comprise slots passing through the thickness of the opaque element. Said slots extend along lines which delineate the desired emblem.

The slots may have a width substantially corresponding to the thickness of said opaque element, for example equal to the thickness of the metal plate in which they are formed.

In embodiments of the present invention, the light radiation generating device comprises a printed circuit board (PCB) with LEDs mounted thereon.

Preferably, the emblem assembly further comprises a front cover element and a rear cover element which can be connected together and are configured to enclose within them said opaque element and said light radiation generating device (or, where provided, the light-guiding element).

In accordance with another aspect of the present invention, a method of manufacturing a backlit emblem assembly is provided.

The method comprises providing an element opaque to light radiation and forming in said opaque portion a portion at least partially transparent to light radiation; said at least partially transparent portion is such as to delineate a desired emblem.

A light radiation generating device which can be selectively activated to generate light radiation so as to illuminate the emblem is provided. The light radiation generating device is coupled to said opaque element with transparent portion.

According to the invention, forming in the opaque element said portion at least partially transparent to light radiation comprises forming in said opaque element perforations arranged so as to delineate the emblem and able to allow the passage of the light radiation generated by the light radiation generating device.

According to embodiments, the method further comprises interposing a light-guiding element between the light radiation generating device and the opaque element, the light-guiding element being arranged so as to convey the light radiation generated by the light radiation generating device towards the at least partially transparent portion of the opaque element.

In embodiments of the present invention, said opaque element is made of metal, in particular aluminium, and said perforations are formed by means of technique chosen from laser or photoengraving or a combination thereof.

In other words, according to the present invention, a backlit emblem assembly is provided, in particular, but not exclusively for use as an aesthetic component of a vehicle (for example motor vehicle, lorry, pedal-driven vehicle), in which the passage of the light, in order to light up the emblem when desired, is obtained by forming - in the area of an opaque component, for example a metal plate, in which the emblem (for example trademark or logo of the car manufacturer) to be lit up is reproduced - perforations in the metal plate (for example through-holes, with a circular, square or other cross-section, and/or grooves passing from one side to the other of the metal plate), arranged so as to delineate the desired emblem.

### Brief description of the figures

Characteristic features and advantages of the present invention will emerge more clearly from the following detailed description of possible embodiments thereof, provided by way of a non-limiting example, to be read with reference to the attached drawings in which:
Fig. 1 shows in schematic form a motor vehicle steering wheel provided with backlit emblem assembly in accordance with an embodiment of the present invention;
Fig. 2 shows an exploded view of a generic backlit emblem assembly in accordance with an embodiment of the present invention;
Figs. 3A-3C show three possible variants for forming a light-transparent part of the emblem assembly according to Fig. 2;
Figs. 4A-4C are schematic views cross-sectioned along the planes indicated by IV_{A}-IV_{A}, IV_{B}-IV_{B}, IV_{C}-IV_{C}, in Figs. 3A-3C, respectively.

### Detailed description of examples of embodiment

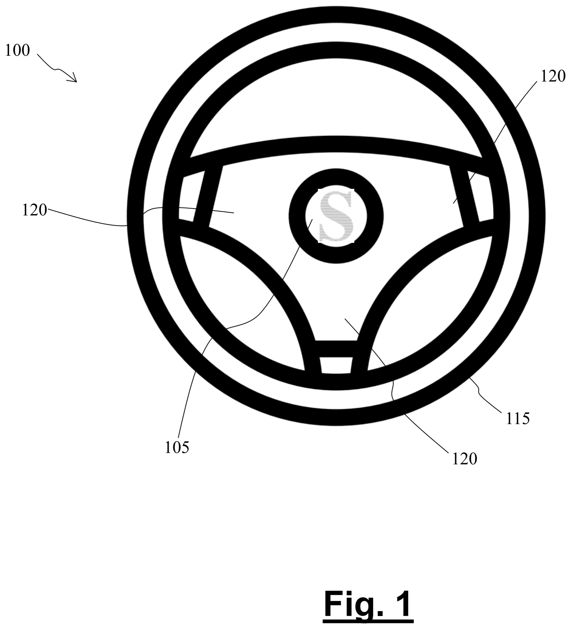

With reference to the Figures, Fig. 1 schematically shows, by way of example, a generic steering wheel 100 of a motor vehicle, for example a motor car or lorry or other type of motor vehicle, provided with a backlit emblem assembly 105 in accordance with an embodiment of the present invention.

The steering wheel 1 in the example shown comprises a steering wheel body 110 comprising a circular rim 115 - with a generally toroidal form in the example shown - which is mechanically connected by means of one or more spokes 120 (three in the example shown) to a steering wheel hub, which is central in the example shown. The spokes 120 are preferably angularly arranged equidistant along the perimeter of the circular rim 115.

The backlit emblem assembly 105 is applied to the steering wheel hub, for example in a front and central position. For this purpose, the steering wheel hub is shaped so as to form a seat, which can be accessed from the rear or the front, in order to house the backlit emblem assembly (as described more fully further below).

The steering wheel 100 is preferably provided with a horn device and/or an airbag device (these not being shown in the figures). The horn device and/or the airbag device are housed in the steering wheel hub.

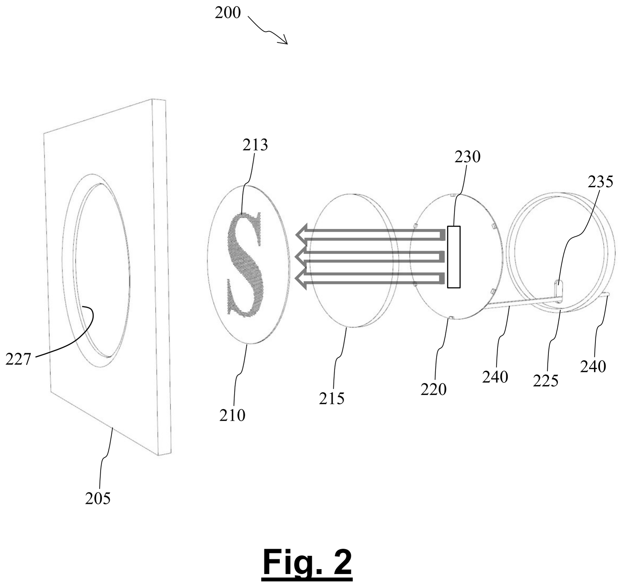

Fig. 2 shows an exploded view of a backlit emblem assembly 200 in accordance with a non-limiting example of embodiment of the present invention, for example the backlit emblem assembly 105 of the steering wheel of Fig. 1.

The backlit emblem assembly 200 of the example of embodiment shown in Fig, 2 comprises several separate elements which can be assembled together to form the backlit emblem assembly.

In the example of embodiment of Fig. 2, the backlit emblem assembly 200 comprises, starting from the front and in the direction towards the rear: a front cover 205, a metal plate 210, for example with a generally circular shape (other shapes are also possible), preferably made of aluminium, perforated, with a plurality of perforations (indicated overall by the reference number 213 in the figure) which are arranged so as to delineate a desired emblem (in the example shown, a generally S-shaped emblem), a light-guiding element 215, a PCB with LEDs and wiring 220 and a rear cover 225.

The front cover 205 is provided with an opening 227, for example in a central position, configured to leave exposed the metal plate portion 210 in which the perforations 213 which delineate the emblem are formed,

In embodiments of the present invention, the front cover 205 of the backlit emblem assembly 200 may also consist of the steering wheel hub of the steering wheel 100 itself.

The rear cover 225 has the function of housing inside it the PCB 220, the light-guiding element 215 and the metal plate 210. The rear cover 225 can be preferably coupled to the front cover 205, for example by means of snap-engagement coupling means, so as to close and hold together the various elements of the backlit emblem assembly 200 and enclose the assembly both at the front and at the rear.

The metal plate 210 with the perforations 213 which delineate the emblem may also be positioned in the front cover 205 both at the rear (i.e. on the side of the rear face of the front cover 205) and at the front (i.e. on the side of the front face of the front cover 205). In the first case (metal plate 210 positioned in the front cover 205 at rear), the front cover 205 may be provided with mechanical coupling means (pegs, pins, bosses, lugs and the like) with the rear cover 225, in turn provided with combined mechanical coupling means. In the second case (metal plate 210 positioned in the front cover 205 at the front), the metal plate 210 with the perforations 213 which define the emblem may be provided with means for mechanical coupling with the rear cover 225.

The PCB 220 comprises a printed circuit board on which light generating devices 230, for example LEDs, and electric and electronic components known per se for controlling the LEDs 230, are mounted and electrically interconnected.

Advantageously, the rear cover 225 is provided with an opening 235 for allowing electric wires 240 to pass through and exit from the back of the rear cover 225, said electric wires connecting the PCB 220 to an electric power source (for example the battery of the motor vehicle on which the steering wheel 100 is intended to be mounted).

The light-guiding element 215 is configured to capture the light generated by the LEDs 230 and to guide it towards the metal plate 210.

More specifically, the light-guiding element 215 functions to homogenize the light radiation from the individual LEDs 230 across its surface. This provides a substantially uniform field of light to the rear face of the metal plate 210. This pre-conditioning of the light is critical, as it ensures that each perforation 213 is illuminated from behind with the same light intensity. This prevents the appearance of brighter spots on the final emblem corresponding to the positions of the underlying LEDs and contributes to the high-quality, uniformly illuminated appearance of the final product.

The perforations 213 in the metal plate 210 are formed and arranged so as to delineate the desired emblem (a general S shape, in the example shown). When the elements of the backlit emblem assembly 200 are assembled, the PCB 230 is electrically powered and the LEDs 230 are lit, the light generated and emitted by the LEDs 230 is guided and conveyed by the light-guiding element 215 towards the metal plate 210. Here, the light may pass through the perforations 213 which delineate the desired emblem (the S shape in the example shown); the light instead will not pass through the remaining portion of the metal plate 210 which does not have the perforations 213. Viewing the emblem assembly 200 from the front, the emblem (in the example, the S shape) will appear illuminated. When the LEDs 230 are switched off, light will no longer be generated; viewing the emblem assembly 200 from the front, it will in any case be possible to see the emblem (the S shape in the example) since the perforations 213 in the metal plate 210 are in any case visible, even in the absence of backlighting, and delineate the emblem which can be seen by a person looking at it.

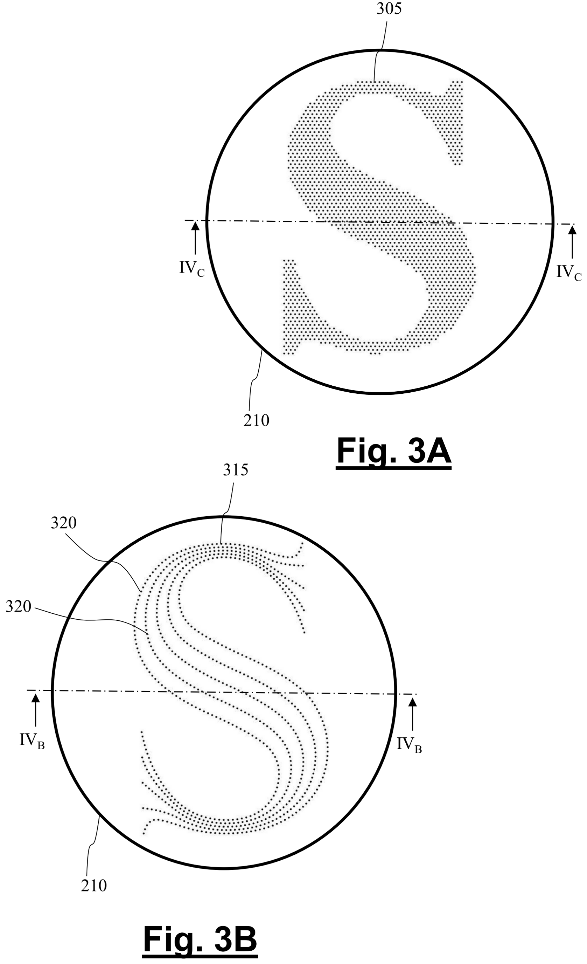

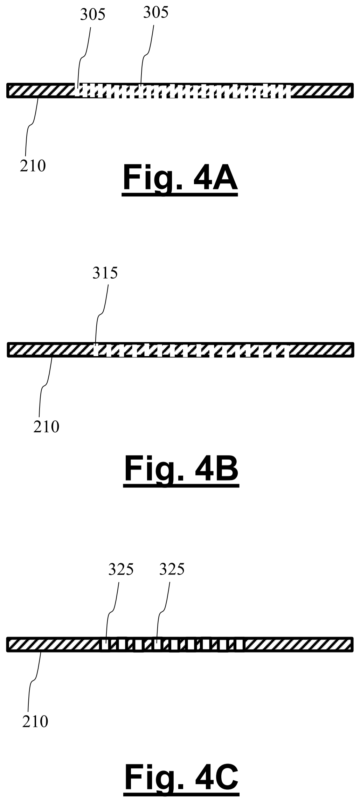

The perforations 213 in the metal plate 210 may be arranged in various ways. Some possible embodiments and arrangements of the perforations 213 in the metal plate 210 according to examples of embodiment of the present invention are shown by way of example in Figs. 3A-3C, with respective schematic views cross-sectioned along the planes indicated by IV_{A}-IV_{A}, IVs-IV_{B}, IV_{C}-IV_{C} in Figs.3A-3C, shown in Figs 4A, 4B and 4C, respectively.

In particular, in the example shown in Fig. 3A (cross-section Fig.4A) the perforations 213 are holes 305 passing from one side to the other of the metal plate 210, with a small diameter, arranged in a regular arrangement, for example a two-dimensional matrix arrangement.

In the example shown in Fig. 3B (cross-section Fig. 4B), the perforations 213 are, as in the example of Fig. 3A, holes 315 passing from one side to the other of the metal plate 210, with a small diameter, arranged in sequence along respective ideal lines (curves in the example) 320 which delineate the emblem.

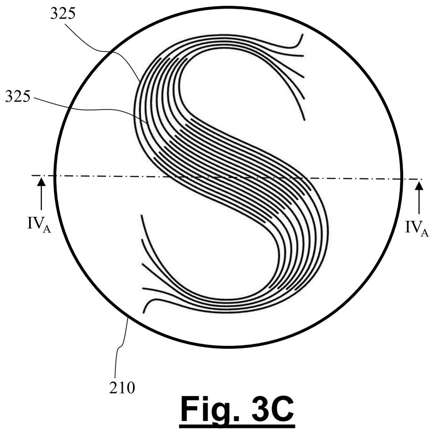

In the example shown in Fig. 3C (cross-section Fig. 4C), the perforations 213 are slots 325, like the holes 306 and 315 passing from one side to the other of the metal plate 210, extending along lines (curves in the example) which delineate the emblem. The extending lines of the slots 325 may delineate only the edges of the desired emblem or (as in the example shown) may also be provided within the edges of the emblem.

In the embodiments of the present invention, the holes 305 or 315 formed in the metal plate 210 may have a diameter approximately equal to the thickness of the metal plate 210 itself. The width of the slots 325 may be approximately equal to the thickness of the metal plate 210. Other sizes of the holes 305 or 315, or of the slots 325, are also possible, i.e. greater or smaller than the thickness of the metal plate 210, for example depending in the desired visual effect of the emblem.

A method according to an embodiment of the present invention for manufacturing the emblem assembly according to the present invention, for example the emblem assembly 200 described above by way of example, is now described.

A metal sheet, for example made of aluminium, is cut in the desired shape to obtain the metal plate 210, for example with a circular shape.

The metal plate 210 may for example have a relatively small thickness, for example ranging from 0.2 mm to 0.5 mm. A small thickness of the metal plate 210 may be important in certain applications of the present invention, for example for the manufacture of emblem assemblies intended for motor vehicle steering wheels, since the spaces available in steering wheels for housing the emblem assembly may be limited (for example owing to the simultaneous presence of the horn and airbag). Moreover, a metal plate with a small thickness advantageously has a lower weight.

The perforations 213 are formed in the metal plate 210, for example by means of laser or photoengraving, or other techniques.

The perforations 213 may consist of holes passing through the entire thickness of the plate 210, with a greater or smaller diameter (depending on the emblem lighting effect which is to be obtained), elongated slots, also passing though the entire thickness of the plate 210, or a combination of two or more of the above.

The dimensions of the perforations 213 in the metal plate 210 (for example, the diameter of the holes, or the width of the slots) may depend on the emblem lighting effect obtained by the light generated by the LEDs of the PCB 220. As just mentioned above, the diameter of the holes formed in the plate 210 may correspond (in particular, be substantially equal) to the thickness of the plate 210. Other emblem lighting effects may be obtained with different dimensions of the perforations 213 (for example, diameters of the holes, widths of the slots), i.e. greater or smaller than the thickness of the plate 210.

The remaining elements of the emblem assembly 200, i.e. the front cover 205, the light-guiding element 215, the PCB 220 and the rear cover 225 may be made in the usual manner known to the persons skilled in the art, and therefore the steps for manufacture thereof will not be described.

The use of a metal plate, such as the metal plate 210, is advantageous since it allows the manufacture of emblem assemblies having surface finishing effects which are typical of metals, for example a wire-brushing effect.

The present invention, although described by way of example with reference to an emblem assembly for use in a motor vehicle steering wheel, may more generally have various other applications. For example, remaining still within the vehicle sector, the present invention may also be applied in order to produce aesthetic components of vehicles, not only for steering wheels of motor vehicles (cars, lorries, rail or wheel public transport means), but also to produce aesthetic components of other vehicles such as motorcycles (two-wheeled motorcycles, motorized tricycles, motorized quadricycles) and pedal-driven vehicles (pedal bicycles, power-assisted bicycles).

It could be concluded that the arrangements according to the prior art create a uniform light on the front surface and then masks it to form an image. The result is a continuously lit shape.

The present invention creates a uniform light on the back surface, which then shines through tiny perforations. The result is a pattern of discrete, equally-bright points of light that form an image on an otherwise opaque material.

### Key for figures:

100: Steering wheel
105: Backlit emblem assembly
110: Steering wheel body
115: Circular rim
120: Spokes
200: Backlit emblem assembly
205: Front cover
210: Metal plate
213: Perforations
215: Light-guiding element
220: PCB with LEDs and wiring
225: Rear cover
227: Opening
230: Light-generating devices
235: Opening
240: Electric wiring
305: Holes
315: Holes
320: Lines
325: Slots

## Claims

1. A backlit emblem assembly (200), comprising:
- an element (210), opaque to light radiation, comprising a portion (213) at least partially transparent to light radiation, said at least partially transparent portion (213) delineating an emblem;
- a light radiation generating device (220, 230) coupled to said opaque element (210), said light radiation generating device (220, 230) being able to be selectively activated to generate light radiation so as to illuminate the emblem,
wherein said at least partially transparent portion (213) of said opaque element (210) comprises perforations (213; 305; 315; 325) formed in said opaque element (210), said perforations (213; 305; 315; 325) being arranged so as to delineate the emblem and being able to allow the passage of the light radiation generated by said light radiation generating device (220, 230),
wherein the emblem assembly further comprises a light-guiding element (215) interposed between said light radiation generating device (220, 230) and said opaque element (210), said light-guiding element (215) being able and arranged so as to convey the light radiation generated by said light radiation generating device (220, 230) towards said at least partially transparent portion (213) of the opaque element (210).

2. The emblem assembly according to claim 1, wherein said opaque element (210) comprises a metal plate, preferably made of aluminum.

3. The emblem assembly according to any one of the preceding claims, wherein said perforations (213) comprise a plurality of holes (305; 315) passing through the thickness of said opaque element (210).

4. The emblem assembly according to claim 3, wherein said through-holes (305) are arranged in a two-dimensional matrix arrangement.

5. The emblem assembly according to claim 3, wherein said through-holes (315) are arranged along a plurality of lines (320) delineating the emblem.

6. The emblem assembly according to any one of claims 3 to 5, wherein said holes (305; 315) have a cross-section with a width substantially corresponding to a thickness of said opaque element (210).

7. The emblem assembly according to any one of claims 1 or 2, wherein said perforations (213) comprise slots (325) passing through the thickness of said opaque element (210), said slots (325) extending along lines delineating the emblem.

8. The emblem assembly according to claim 7, wherein said slots (325) have a width substantially corresponding to a thickness of said opaque element (210).

9. The emblem assembly according to any one of the preceding claims, wherein said light radiation generating device (220, 230) comprises a printed circuit board PCB (220) with LEDs (230) mounted thereon.

10. The emblem assembly according to any one of the preceding claims, further comprising a front cover element (205) and a rear cover element (225) which can be connected together and are configured to enclose within them said opaque element (210) and said light radiation generating device (220, 230).

11. A method of manufacturing a backlit emblem assembly, comprising the steps of:
- providing an element (210) opaque to light radiation;
- forming in said opaque element (210) a portion (213) at least partially transparent to light radiation, said at least partially transparent portion (213) delineating an emblem;
- providing a light radiation generating device (220, 230) able to be selectively activated to generate light radiation so as to illuminate the emblem;
- coupling the light radiation generating device (220, 230) to said opaque element (210) with transparent portion (213),
wherein said step of forming in said opaque element (210) said portion (213) at least partially transparent to light radiation comprises forming in said opaque element (210) perforations (213; 305; 315; 325) arranged so as to delineate the emblem and able to allow the passage of the light radiation generated by said light radiation generating device (220, 230).

12. The method according to claim 11, further comprising interposing a light-guiding element (215) between said light radiation generating device (220, 230) and said opaque element (210), said light-guiding element (215) being arranged so as to convey the light radiation generated by said light radiation generating device (220, 230) towards said at least partially transparent portion (213) of the opaque element (210).

13. The method according to claim 11 or 12, wherein said opaque element (210) is made of metal, in particular aluminum.

14. The method according to claim 11, 12 or 13, wherein said perforations (213) are formed by means of a technique chosen from laser or photoengraving or a combination thereof.
